(19) Europäisches Patentamt European Patent Office Office européen des brevets

(11) **EP 4 367 520 B1**

(12) **EUROPEAN PATENT SPECIFICATION**

(45) Date of publication and mention of the grant of the patent:
**26.11.2025 Bulletin 2025/48**

(21) Application number: **22852157.1**

(22) Date of filing: **02.08.2022**

(51) International Patent Classification (IPC):
*G01P 3/481* (2006.01)   *G01P 3/489* (2006.01)
*G01P 15/16* (2013.01)

(52) Cooperative Patent Classification (CPC):
**G01P 3/481; G01P 3/489; G01P 15/16**

(86) International application number:
**PCT/CN2022/109624**

(87) International publication number:
**WO 2023/011445 (09.02.2023 Gazette 2023/06)**

(54) **SYSTEMS AND METHODS FOR ROTOR SPEED DETERMINATION**

SYSTEME UND VERFAHREN ZUR ROTORDREHZAHLBESTIMMUNG

SYSTÈMES ET PROCÉDÉS DE DÉTERMINATION DE VITESSE DE ROTOR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2021 CN 202110881706**

(43) Date of publication of application:
**15.05.2024 Bulletin 2024/20**

(73) Proprietor: **Shanghai United Imaging Healthcare Co., Ltd.**
**Shanghai 201807 (CN)**

(72) Inventors:
• **LI, Fei**
  **Shanghai 201807 (CN)**
• **XIAO, Shaomin**
  **Shanghai 201807 (CN)**

(74) Representative: **Wang, Bo**
**Panovision IP**
**Ebersberger Straße 3**
**85570 Markt Schwaben (DE)**

(56) References cited:
CN-A- 1 580 784   CN-A- 103 048 484
CN-A- 106 932 604   CN-A- 106 932 604
CN-A- 110 879 298   CN-A- 113 804 914
JP-A- 2001 033 472   US-A- 4 975 642
US-A- 4 975 642   US-A- 6 031 966
US-A1- 2013 334 993

EP 4 367 520 B1

**Description**

**CROSS-REFERENCE TO RELATED APPLICATIONS**

This application claims priority to Chinese Patent Application No. 202110881706.3 filed on August 2, 2021.

**TECHNICAL FIELD**

The present disclosure generally relates to rotor monitoring, and in particular, to systems and methods for determining a speed of a rotor.

**BACKGROUND**

A rotor is used to facilitate the movement of a device (e.g., a servo device) connected with the rotor. Therefore, it is desirable to provide systems and methods for accurately determining a speed of a rotor, thereby accurately controlling the movement of a device connected with the rotor.

CN106932604A relates to a real-time speed measurement method of a motor. The method uses a front and rear adjustment window, wherein the rear adjustment window of the previous speed measurement period is used as a front adjustment window of the current speed measurement period to obtain the adjustment period and to calculate a real-time speed of the motor to be measured based on the adjustment period and number of pulses in the current speed measurement period.

**SUMMARY**

According to an aspect of the present disclosure, a system may be provided. The system may include at least one storage device including a set of instructions; at least one processor in communication with the at least one storage device, wherein when executing the set of instructions, the at least one processor may be configured to cause the system to perform operations including: acquiring, based on a sensor, a plurality of pulses associated with movement of a rotor within a plurality of time periods, the rotor being operably connected with the sensor; determining, based on a specific pulse associated with the movement of the rotor within a previous time period and an actual pulse count associated with the movement of the rotor within a target time period, an ideal time period for determining a speed of the rotor in the target time period; determining, based on at least one of the ideal time period or the actual pulse count within the target time period, an ideal pulse count within the ideal time period; and determining the speed of the rotor in the target time period based on the ideal time period and the ideal pulse count.

According to an aspect of the present disclosure, a method may be provided. The method may be implemented on a computing device having at least one processor and at least one storage device. The method may include: acquiring, based on a sensor, a plurality of pulses associated with movement of a rotor within a plurality of time periods, the rotor being operably connected with the sensor; determining, based on a specific pulse associated with the movement of the rotor within a previous time period and an actual pulse count associated with the movement of the rotor within a target time period, an ideal time period for determining a speed of the rotor in the target time period; determining, based on at least one of the ideal time period or the actual pulse count within the target time period, an ideal pulse count within the ideal time period; and determining the speed of the rotor in the target time period based on the ideal time period and the ideal pulse count.

According to an aspect of the present disclosure, a non-transitory computer readable medium may be provided. The non-transitory computer readable medium may include at least one set of instructions, wherein when executed by at least one processor of a computing device, the at least one set of instructions may cause the at least one processor to effectuate a method comprising: acquiring, based on a sensor, a plurality of pulses associated with movement of a rotor within a plurality of time periods, the rotor being operably connected with the sensor; determining, based on a specific pulse associated with the movement of the rotor within a previous time period and an actual pulse associated with the movement of the rotor within a target time period, an ideal time period for determining a speed of the rotor in the target time period determining, based on at least one of the ideal time period or the actual pulse count within the target time period, an ideal pulse count within the ideal time period; and determining the speed of the rotor in the target time period based on the ideal time period and the ideal pulse count.

According to an aspect of the present disclosure, a system may be provided. The system may include at least one storage device including a set of instructions; at least one processor in communication with the at least one storage device, wherein when executing the set of instructions, the at least one processor may be configured to cause the system to perform operations including: acquiring a first speed of a rotor in a target time period based on first operation data of the rotor acquired by a sensor in the target time period, the rotor being operably connected with the sensor; determining a second speed of the rotor in the target time period based on second operation data of the rotor in a first previous time period before the target time period; and determining a target speed of the rotor in the target time period based on the first speed of the rotor in the target time period and the second speed of the rotor in the target time period.

According to an aspect of the present disclosure, a method may be provided. The method may be implemented on a computing device having at least one processor and at least one storage device. The method may include: acquiring a first speed of a rotor in a target time period based on first operation data of the rotor acquired by a sensor in the target time period, the rotor being operably connected with the sensor; determining a second speed of the rotor in the target time period based on second operation data of the rotor in a first previous time period before the target time period; and determining a target speed of the rotor in the target time period based on the first speed of the rotor in the target time period and the second speed of the rotor in the target time period.

According to an aspect of the present disclosure, a non-transitory computer readable medium may be provided. The non-transitory computer readable medium may include at least one set of instructions, wherein when executed by at least one processor of a computing device, the at least one set of instructions may cause the at least one processor to effectuate a method comprising: acquiring a first speed of a rotor in a target time period based on first operation data of the rotor acquired by a sensor in the target time period, the rotor being operably connected with the sensor; determining a second speed of the rotor in the target time period based on second operation data of the rotor in a first previous time period before the target time period; and determining a target speed of the rotor in the target time period based on the first speed of the rotor in the target time period and the second speed of the rotor in the target time period.

## BRIEF DESCRIPTION OF THE DRAWINGS

The present disclosure is further described in terms of exemplary embodiments. These exemplary embodiments are described in detail with reference to the drawings. The drawings are not to scale. These embodiments are non-limiting schematic embodiments, in which like reference numerals represent similar structures throughout the several views of the drawings, and wherein:

FIG. 1 is a schematic diagram illustrating an exemplary speed monitoring system according to some embodiments of the present disclosure;
FIG. 2 is a schematic diagram illustrating exemplary hardware and/or software components of an exemplary computing device according to some embodiments of the present disclosure;
FIG. 3 is a schematic diagram illustrating exemplary hardware and/or software components of an exemplary mobile device according to some embodiments of the present disclosure;
FIG. 4 is a block diagram illustrating an exemplary processing device according to some embodiments of the present disclosure;
FIG. 5 is a flowchart illustrating an exemplary process for determining a speed of a rotor according to some embodiments of the present disclosure;
FIG. 6 is a schematic diagram illustrating an exemplary rotor speed determination according to some embodiments of the present disclosure;
FIG. 7 is a schematic diagram illustrating an exemplary rotor speed determination according to some embodiments of the present disclosure;
FIG. 8 is a schematic diagram illustrating an exemplary timing signal of a plurality of pulses in FIG. 7 according to some embodiments of the present disclosure;
FIG. 9 is a block diagram illustrating an exemplary processing device according to some embodiments of the present disclosure;
FIG. 10 is a flowchart illustrating an exemplary process for determining a speed of a rotor according to some embodiments of the present disclosure; and
FIG. 11 is a schematic diagram illustrating exemplary time-speed curves of a rotor according to some embodiments of the present disclosure.

## DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high-level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but by the appended claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be understood that the terms "system," "unit," "module," and/or "block" used herein are one method to distinguish different components, elements, parts, sections or assemblies of different levels in ascending order. However, the terms may be displaced by another expression if they achieve the same purpose.

The modules (or units, blocks, units) described in the present disclosure may be implemented as software and/or hardware modules and may be stored in any type of non-transitory computer-readable medium or other storage devices. In some embodiments, a software module may be compiled and linked into an executable program. It will be appreciated that software modules can be callable from other modules or from themselves, and/or can be invoked in response to detected events or interrupts. Software modules configured for execution on computing devices can be provided on a computer readable medium or as a digital download (and can be originally stored in a compressed or installable format that requires installation, decompression, or decryption prior to execution). Such software code can be stored, partially or fully, on a memory device of the executing computing device, for execution by the computing device. Software instructions can be embedded in a firmware, such as an EPROM. It will be further appreciated that hardware modules (e.g., circuits) can be included in connected or coupled logic units, such as gates and flip-flops, and/or can be included in programmable units, such as programmable gate arrays or processors. The modules or computing device functionality described herein are preferably implemented as hardware modules, but can be software modules as well. In general, the modules described herein refer to logical modules that can be combined with other modules or divided into units despite their physical organization or storage.

Certain terminology has been used to describe embodiments of the present disclosure. For example, the terms "one embodiment," "an embodiment," and/or "some embodiments" mean that a particular feature, structure or characteristic described in connection with the embodiment is in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

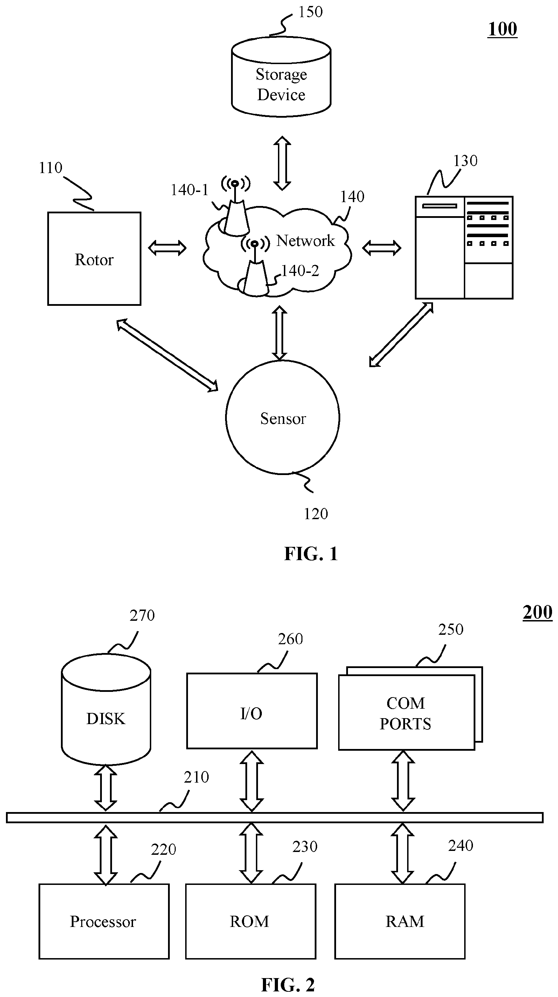

FIG. 1 is a schematic diagram illustrating an exemplary speed monitoring system according to some embodiments of the present disclosure. In some embodiments, the speed monitoring system 100 may include a rotor 110 (e.g., a high-precision rotor), a sensor 120, a processing device 130, a network 140, and a storage device 150.

The rotor 110 may be connected with a device (e.g., a servo device) and configured to facilitate the movement of the device. The movement may include a linear movement (e.g., an up and down movement), a non-linear movement (e.g., a parabolic movement, a hyperbolic movement, an exponential movement, a triangular movement), etc. In some embodiments, the device may include an arm (e.g., an arm of a medical device), a gantry (e.g., a gantry of a medical device), a brake (e.g., a brake of an automobile), a limit switch, an automatic door, an elevator, or the like, or any combination thereof. For example, the medical device may include an X-ray device, a magnetic resonance imaging (MRI) device, a computed tomography (CT) device, a positron emission tomography (PET) device, a single photon emission computed tomography (SPECT) device, a linear accelerator, a cyclotron, a synchrotron, or the like, or any combination thereof.

In some embodiments, the rotor 110 may communicate with one or more components of the speed monitoring system 100 (e.g., the sensor 120, the processing device 130, the storage device 150) via the network 140. In some embodiments, the rotor 110 may be directly connected to one or more components of the speed monitoring system 100 (e.g., the sensor 120, the processing device 130, the storage device 150).

The sensor 120 may be configured to detect the movement of the rotor 110. In some embodiments, the sensor 120 may convert the movement of the rotor 110 into an electric signal. For example, the sensor 120 may convert the movement of the rotor 110 into a plurality of pulses. In some embodiments, the sensor 120 may include an encoder, for example, an incremental encoder (e.g., an incremental photoelectric pulse encoder), an absolute encoder, etc.

In some embodiments, the sensor 120 may communicate with one or more components of the speed monitoring system 100 (e.g., the rotor 110, the processing device 130, the storage device 150) via the network 140. In some embodiments, the sensor may be directly connected to one or more components of the speed monitoring system 100 (e.g., the rotor 110, the processing device 130, the storage device 150).

In some embodiments, the processing device 130 may include a single server or a server group. The server group may be centralized or distributed (e.g., the processing device 130 may be a distributed system). In some embodiments, the processing device 130 may be local or remote. For example, the processing device 130 may access information and/or data stored in the rotor 110, the sensor 120, and/or the storage device 150 via the network 140. As another example, the processing device 130 may be directly connected to the rotor 110, the sensor 120, and/or the storage device 150 to access stored information and/or data. In some embodiments, the processing device 130 may be implemented on a cloud platform or an onboard computer. In some embodiments, the processing device 130 may be implemented on a computing device 200 including one or more components illustrated in FIG. 2 of the present disclosure.

In some embodiments, the processing device 130 may process information and/or data associated with rotor speed monitoring to perform one or more functions described in the present disclosure. For example, the processing device 130 may determine an ideal time period and an ideal pulse count based on at least one pulse associated with the movement of the rotor within a previous time period and an actual pulse count associated with the movement of the rotor within a target time period. Further, the processing device 130 may determine a speed of the rotor in the target time period based on the ideal time period and the ideal pulse count. In some embodiments, the processing device 130 may include one or more processing engines (e.g., single-core processing engine(s) or multi-core processor(s)).

In some embodiments, the processing device 130 may be connected to the network 140 to communicate with one or more components (e.g., the rotor 110, the sensor 120, the storage device 150) of the speed monitoring system 100. In some embodiments, the processing device 130 may be directly connected to or communicate with one or more components (e.g., the rotor 110, the sensor 120, the storage device 150) of the speed monitoring system 100.

The network 140 may facilitate exchange of information and/or data. In some embodiments, one or more components (e.g., the rotor 110, the sensor 120, the processing device 130, the storage device 150) of the speed monitoring system 100 may transmit information and/or data to other component(s) of the speed monitoring system 100 via the network 140. For example, the processing device 130 may acquire a plurality of pulses associated with the movement of a rotor within a plurality of time periods from the sensor 120 via the network 140. In some embodiments, the network 140 may be any type of wired or wireless network, or a combination thereof. In some embodiments, the network 140 may include one or more network access points. For example, the network 140 may include wired or wireless network access points (e.g., a point 140-1, a point 140-2), through which one or more components of the speed monitoring system 100 may be connected to the network 140 to exchange data and/or information.

The storage device 150 may store data and/or instructions. In some embodiments, the storage device 150 may store data obtained from the rotor 110, the sensor 120, the processing device 130, or an external storage device. For example, the storage device 150 may store a plurality of pulses associated with the movement of a rotor within a plurality of time periods output by the rotor 110. In some embodiments, the storage device 150 may store data and/or instructions that the processing device 130 may execute or use to perform exemplary methods described in the present disclosure. For example, the storage device 150 may store instructions that the processing device 130 may execute or use to determine an ideal time period and an ideal pulse count based on at least one pulse associated with the movement of the rotor within a previous time period and an actual pulse count associated with the movement of the rotor within a target time period.

In some embodiments, the storage device 150 may include a mass storage, a removable storage, a volatile read-and-write memory, a read-only memory (ROM), or the like, or any combination thereof. In some embodiments, the storage device 150 may be connected to the network 140 to communicate with one or more components (e.g., the rotor 110, the sensor 120, the processing device 130) of the speed monitoring system 100. One or more components of the speed monitoring system 100 may access the data or instructions stored in the storage device 150 via the network 140. In some embodiments, the storage device 150 may be directly connected to or communicate with one or more components (e.g., the rotor 110, the sensor 120, the processing device 130) of the speed monitoring system 100. In some embodiments, the storage device 150 may be part of the processing device 130. For example, the storage device 150 may be integrated into the processing device 130.

In some embodiments, two or more components of the speed monitoring system 100 may be integrated in a same device. For example, the rotor 110, the sensor 120, and the processing device 130 may be integrated in the same device. In some embodiments, one or more components of the speed monitoring system 100 may be remote from each other. For example, the rotor 110 may be remote from the processing device 130. In some embodiments, one or more components of the speed monitoring system 100 may be omitted. For example, the speed monitoring system 100 may include the rotor 110, the sensor 120, and the processing device 130.

In some embodiments, the speed monitoring system 100 may also include a user device (not shown) configured to receive information and/or data from the rotor 110, the sensor 120, the processing device 130, and/or the storage device 150. The user device may provide a user interface via which a user may view information (e.g., a speed of a rotor) and/or input data (e.g., a time threshold, a weight) and/or instructions to the speed monitoring system 100.

In some embodiments, the speed monitoring system 100 may also include an input/output (I/O) component. The I/O component may be configured to input or output signals, data, or information. In some embodiments, the I/O component may include an input device and an output device. Exemplary input devices may include a keyboard, a mouse, a touch screen, a microphone, or the like, or any combination thereof. Exemplary output devices may include a display device, a speaker, a printer, a projector, or the like, or any combination thereof.

FIG. 2 is a schematic diagram illustrating exemplary hardware and/or software components of an exemplary computing device according to some embodiments of the present disclosure. The computing device 200 may be used to implement any component of the speed monitoring system 100 as described herein. For example, the processing device 130 may be implemented on the computing device 200, via its hardware, software program, firmware, or a combination thereof. Although only one such computer is shown, for convenience, the computer functions relating to rotor speed monitoring as described herein may be implemented in a distributed fashion on a number of similar platforms to distribute the processing load.

The computing device 200, for example, may include COM ports 250 connected to and from a network connected thereto to facilitate data communications. The computing device 200 may also include a processor (e.g., a processor 220), in the form of one or more processors (e.g., logic circuits), for executing program instructions. For example, the processor 220 may include interface circuits and processing circuits therein. The interface circuits may be configured to receive electronic signals from a bus 210, wherein the electronic signals encode structured data and/or instructions for the processing circuits to process. The processing circuits may conduct logic calculations, and then determine a conclusion, a result, and/or an instruction encoded as electronic signals. Then the interface circuits may send out the electronic signals from the processing circuits via the bus 210.

The computing device 200 may further include one or more storages configured to store various data files (e.g., program instructions) to be processed and/or transmitted by the computing device 200. In some embodiments, the one or more storages may include a high speed random access memory (not shown), a nonvolatile memory (not shown), a disk 270, a read-only memory (ROM) 230, a random-access memory (RAM) 240, or the like, or any combination thereof. In some embodiments, the one or more storages may further include a remote storage corresponding to the processor 220. The remote storage may connect to the computing device 200 via the network 140. The computing device 200 may also include program instructions stored in the one or more storages (e.g., the ROM 230, RAM 240, and/or another type of non-transitory storage medium) to be executed by the processor 220. The methods and/or processes of the present disclosure may be implemented as the program instructions. The computing device 200 may also include an I/O component 260, supporting input/output between the computing device 200 and other components. The computing device 200 may also receive programming and data via network communications.

Merely for illustration, only one processor is illustrated in FIG. 2. Multiple processors 220 are also contemplated; thus, operations and/or method steps performed by one processor 220 as described in the present disclosure may also be jointly or separately performed by the multiple processors. For example, if in the present disclosure the processor 220 of the computing device 200 executes both operation A and operation B, it should be understood that operation A and operation B may also be performed by two different processors 220 jointly or separately in the computing device 200 (e.g., a first processor executes operation A and a second processor executes operation B, or the first and second processors jointly execute operations A and B).

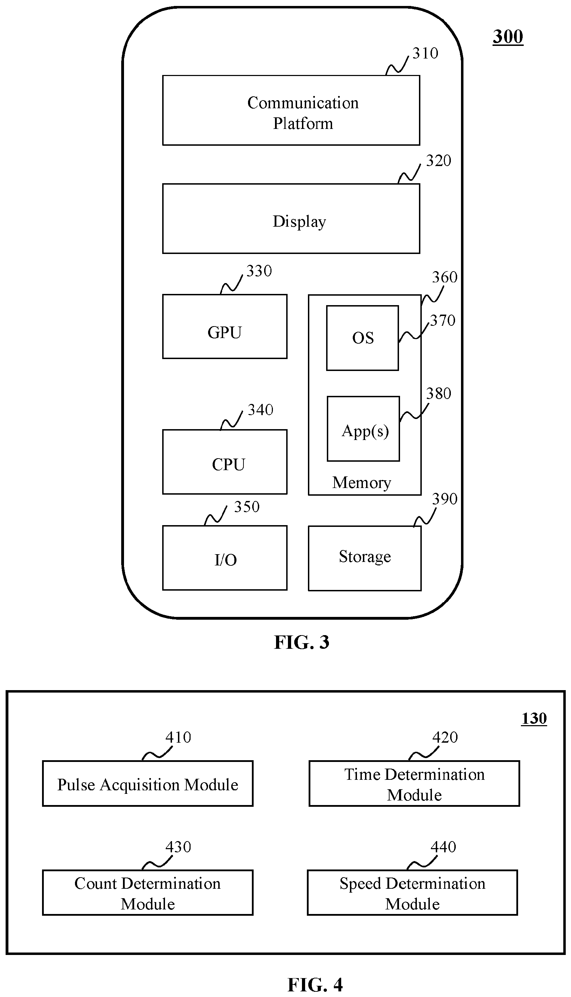

FIG. 3 is a schematic diagram illustrating exemplary hardware and/or software components of an exemplary mobile device according to some embodiments of the present disclosure. In some embodiments, the processing device 130 or the user device may be implemented on the mobile device 300.

As illustrated in FIG. 3, the mobile device 300 may include a communication platform 310, a display 320, a graphics processing unit (GPU) 330, a central processing unit (CPU) 340, an I/O 350, a memory 360, a mobile operating system (OS) 370, and a storage 390. In some embodiments, any other suitable components, including but not limited to a system bus or a controller (not shown), may also be in the mobile device 300.

In some embodiments, the mobile operating system 370 (e.g., iOS™, Android™, Windows Phone™) and one or more applications 380 may be loaded into the memory 360 from the storage 390 in order to be executed by the CPU 340. The applications 380 may include a browser or any other suitable mobile apps for receiving and rendering information relating to rotor speed monitoring or other information from the speed monitoring system 100. User interactions with the information stream may be achieved via the I/O 350 and provided to the processing device 130 and/or other components of the speed monitoring system 100 via the network 140.

FIG. 4 is a block diagram illustrating an exemplary processing device according to some embodiments of the present disclosure. The processing device 130 may include a pulse acquisition module 410, a time determination module 420, a count determination module 430, and a speed determination module 440.

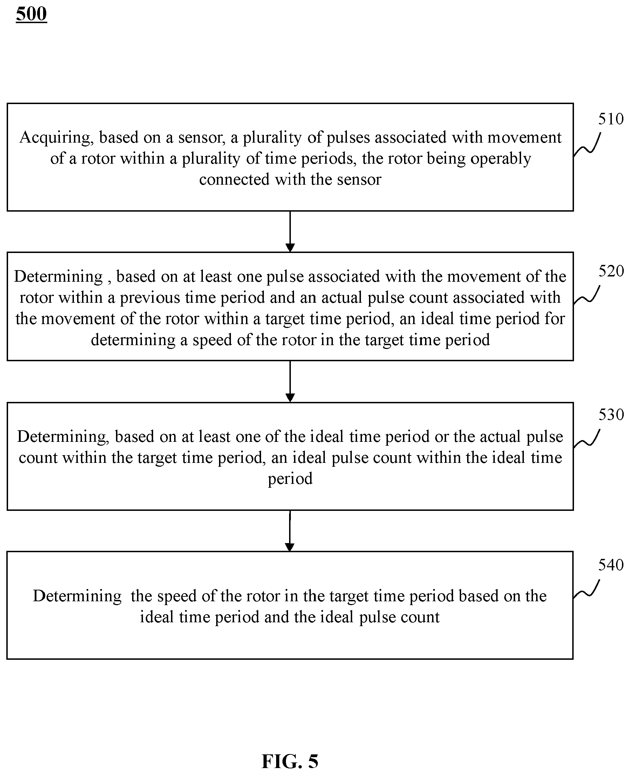

The pulse acquisition module 410 may be configured to acquire, based on a sensor, a plurality of pulses associated with movement of a rotor within a plurality of time periods, more descriptions of which may be found elsewhere in the present disclosure (e.g., FIGs. 5-8 or the descriptions thereof).

The time determination module 420 may be configured to determine, based on a specific pulse associated with the movement of the rotor within a previous time period and an actual pulse count associated with the movement of the rotor within a target time period, an ideal time period for determining a speed of the rotor in the target time period, more descriptions of which may be found elsewhere in the present disclosure (e.g., FIGs. 5-8 or the descriptions thereof).

The count determination module 430 may be configured to determine, based on at least one of the ideal time period or the actual pulse count within the target time period, an ideal pulse count within the ideal time period, more descriptions of which may be found elsewhere in the present disclosure (e.g., FIGs. 5-8 or the descriptions thereof).

The speed determination module 440 may be configured to determine the speed of the rotor in the target time period based on the ideal time period and the ideal pulse count, more descriptions of which may be found elsewhere in the present disclosure (e.g., FIGs. 5-8 or the descriptions thereof).

Two or more of the modules may be combined into a single module, and any one of the modules may be divided into two or more units. For example, the time determination module 420 and the count determination module 430 may be combined as a single module which may determine the ideal time period and the ideal pulse count.

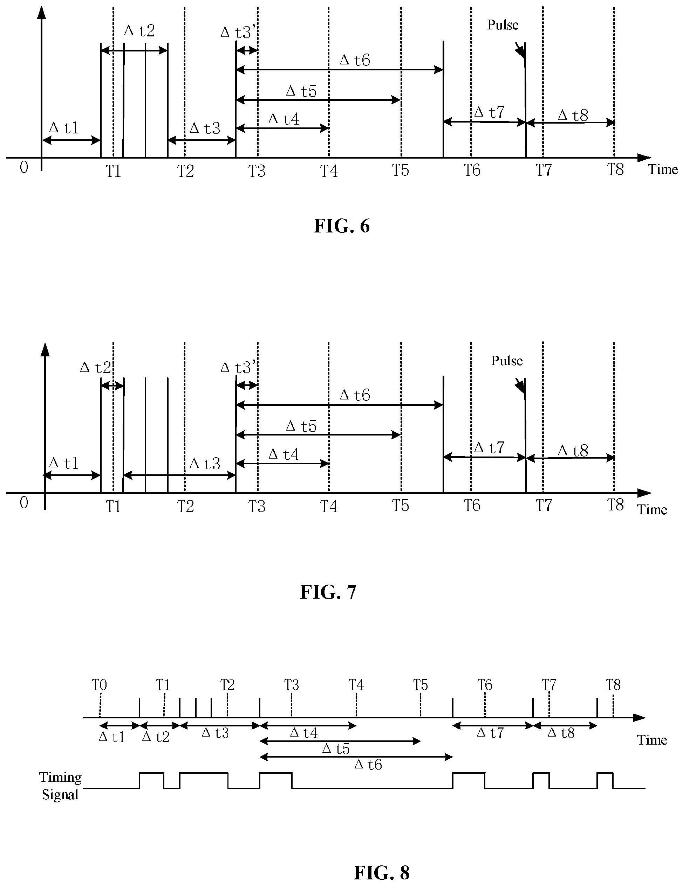

FIG. 5 is a flowchart illustrating an exemplary process for determining a speed of a rotor according to some embodiments of the present disclosure. FIG. 6 is a schematic diagram illustrating an exemplary rotor speed determination according to some embodiments of the present disclosure. FIG. 7 is a schematic diagram illustrating an exemplary rotor speed determination according to some embodiments of the present disclosure. FIG. 8 is a schematic diagram illustrating an exemplary timing signal of a plurality of pulses in FIG. 7 according to some embodiments of the present disclosure. In some embodiments, process 500 may be implemented as a set of instructions (e.g., an application) stored in the storage ROM 230 or RAM 240. The processor 220 and/or the modules in FIG. 4 may execute the set of instructions, and when executing the instructions, the processor 220 and/or the modules may be configured to perform process 500.

In 510, the processing device 130 (e.g., the pulse acquisition module 410) may acquire, based on a sensor (e.g., the sensor 120 in FIG. 1), a plurality of pulses associated with movement of a rotor (e.g., the rotor 110 in FIG. 1) within a plurality of time periods. The rotor may be operably connected with the sensor. The sensor may convert the movement of the rotor into the plurality of pulses. The plurality of pulses may be output by the sensor. In some embodiments, the sensor may include an encoder, for example, an incremental encoder (e.g., an incremental photoelectric pulse encoder), an absolute encoder, etc.

In some embodiments, the plurality of time periods may be consecutive. For example, a starting time point of a time period among the plurality of time periods may be an end time point of a consecutive time period previous to the time period. An end time point of a time period among the plurality of time periods may be a starting time point of a consecutive time period next to the time period. The plurality of time periods may be in a time order. In some embodiments, a time length of each of the plurality of time periods may be the same. In some embodiments, a plurality of time lengths of the plurality of time periods may be different.

In some embodiments, the plurality of pulses may be distributed in the plurality of time periods. The processing device 130 may determine a plurality of time points of the plurality of pulses. The processing device 130 may determine an actual pulse count within each of the plurality of time periods based on the plurality of time points. A count of the plurality of time points within the time period may be equal to the actual pulse count within the time period. Merely by way of example, as shown in FIG. 6, there are eighth successive time periods in a time order, i.e., $T_1$, $T_2$, $T_3$, $T_4$, $T_5$, $T_6$, $T_7$, and $T_8$. An actual pulse count within the first time period $T_1$ is 1. An actual pulse count within the second time period $T_2$ is 3. An actual pulse count within the third time period $T_3$ is 1. An actual pulse count within the fourth time period $T_4$ is 0. An actual pulse count within the fifth time period $T_5$ is 0. An actual pulse count within the sixth time period $T_6$ is 1. An actual pulse count within the seventh time period $T_7$ is 1. An actual pulse count within the eighth time period $T_8$ is 0.

In 520, the processing device 130 (e.g., the time determination module 420) may determine, based on at least one pulse associated with the movement of the rotor within a previous time period and an actual pulse count associated with the movement of the rotor within a target time period, an ideal time period for determining a speed of the rotor in the target time period. The previous time period may be before the target time period. The previous time period may be the nearest time period, whose actual pulse count exceeds zero, to the target time period. The previous time period and the target time period may be consecutive or not. In some embodiments, the processing device 130 may determine the ideal time period based on a specific pulse of the at least one pulse associated with the movement of the rotor within the previous time period and the actual pulse count associated with the movement of the rotor within the target time period. The specific pulse of the at least one pulse associated with the movement of the rotor within the previous time period may include a last pulse within the previous time period or a first pulse within the previous time period.

In some embodiments, the processing device 130 may determine a start time point of the ideal time period based on the specific pulse of the at least one pulse within the previous time period. The processing device 130 may designate a time point when the specific pulse within the previous time period generates as the start time point. In some examples, that are not part of the claimed invention, the processing device 130 may designate a time point when the last pulse within the previous time period generates as the start time point. In the embodiment of the claimed invention, the processing device 130 may designate a time point when the first pulse within the previous time period generates as the start time point.

In some examples, that are not part of the claimed invention, the processing device 130 may determine an end time point of the ideal time period based on the actual pulse count within the target time period. The processing device 130 may generate a first determination result by determining whether the actual pulse count within the target time period exceeds zero. The processing device 130 may determine the end time point of the ideal time period based on the first determination result.

In the embodiment of the claimed invention, in response to determining that the actual pulse count within the target time period is equal to zero, the processing device 130 may designate an end time point of the target time period as the end time point of the ideal time period. Merely by way of example, assuming that the target time period includes the fourth time period ($T_4$) in FIG. 6, the ideal time period (e.g., $\Delta t_4$) is from a time point when a last pulse within the third time period ($T_3$) generates to an end time point of the fourth time period. The ideal time period may be equal to a sum of a time

period ( $\Delta t_3'$ ) from a time point when the last pulse within the third time period generates to an end time point of the third time period ($T_3$) and the fourth time period ($T_4$).

In some examples, that are not part of the claimed invention, the start time point may include a time point when the last pulse within the previous time period generates. In response to determining that the actual pulse count within the target time period exceeds zero, the processing device 130 may designate a time point when a last pulse within the target time period generates as the end time point of the ideal time period. Merely by way of example, assuming that the target time period includes the second time period ($T_2$) in FIG. 6, the ideal time period ($\Delta t_2$) is from a time point when a last pulse within the first time period ($T_1$) generates to a time point when a last pulse within the second time period ($T_2$) generates. As another example, assuming that the target time period includes the seventh time period ($T_7$) in FIG. 6, the ideal time period ($\Delta t_7$) is from a time point when a last pulse within the sixth time period ($T_6$) generates to a time point when a last pulse within the seventh time period ($T_7$) generates.

In the embodiment of the claimed invention, the start time point of the ideal time period may include a time point when the first pulse within the previous time period generates. In response to determining that the actual pulse count within the target time period exceeds zero, the processing device 130 may designate a time point when a first pulse within the target time period generates as the end time point of the ideal time period. Merely by way of example, assuming that the target time period includes the third time period ($T_3$) in FIG. 7, the ideal time period ($\Delta t_3$) is from a time point when a first pulse within the second time period ($T_2$) generates to a time point when a first pulse within the third time period generates.

In some examples, that are not part of the claimed invention, the processing device 130 may determine the ideal time period based on a timing signal. Taking a timing signal of a plurality of pulses in FIG. 8 as an example, a descent edge of the timing signal may represent an end time point of a time period, and a rising edge of the timing signal may represent a time point when a first pulse within the time period generates. The processing device 130 may determine the ideal time period based on the descent edges and the rising edges of the timing signal.

In 530, the processing device 130 (e.g., the count determination module 430) may determine, based on the ideal time period or an actual pulse count within the target time period, an ideal pulse count within the ideal time period.

In some embodiments, in response to determining that the actual pulse count within the target time period is equal to zero, the processing device 130 may generate a second determination result by determining whether a time length of the ideal time period is longer than a time threshold. The processing device 130 may determine the ideal pulse count within the ideal time period based on the second determination result.

In some embodiments, in response to determining that the time length of the ideal time period is longer than the time threshold, the processing device 130 may designate the ideal pulse count within the ideal time period as zero. In some embodiments, in response to determining that the time length of the ideal time period is smaller than or equal to the time threshold, the processing device 130 may designate the ideal pulse count within the ideal time period as one.

In some embodiments, the time threshold may be a default setting of the speed monitoring system 100 or may be adjustable under different situations. In some embodiments, the processing device 130 may determine the time threshold based on one or more factors. For example, the one or more factors may include the precision of the processing device 130 (e.g., a processor), the precision of the sensor, the minimum running speed of the rotor, the definition of the minimum running speed of the rotor, an application scenario of the rotor, etc. In some embodiments, the minimum running speed of the rotor may be determined according to practical demands. For example, the more accurate the speed of the rotor in the target time period is, the smaller the minimum running speed of the rotor may be.

In some examples, that are not part of the claimed invention, the start time point may include a time point when the last pulse within the previous time period generates. In response to determining that the actual pulse count within the target time period exceeds zero, the processing device 130 may designate the actual pulse count within the target time period as the ideal pulse count within the ideal time period.

In some embodiments, the start time point of the ideal time period may include a time point when the first pulse within the previous time period generates (e.g., as shown in FIG. 7). In response to determining that the actual pulse count within the target time period exceeds zero, the processing device 130 may determine the ideal pulse count within the ideal time period based on the actual pulse count within the ideal time period. In some embodiments, the processing device 130 may designate the actual pulse count within the ideal time period as the ideal pulse count. By determining the ideal time period and the ideal pulse count based on the first pulse of the at least one pulse associated with the movement of the rotor within the previous time period, the processing device 130 may only need to record the time point when the first pulse within the previous time period generates instead of recoding all time points when all pulses within the previous time period generate, which may be implemented easily and optimize the resource utilization.

Merely by way of example, as shown in FIG. 7, if the target time period is the third time period ($T_3$), the previous time period is the second time period ($T_2$), the ideal time period (e.g., $\Delta t_3$ in FIG. 7) is from a first pulse within the second time period to a first pulse within the third time period, and the ideal pulse count is 1.

It should be noted that the above descriptions are for illustration purposes and non-limiting. In some examples, that are not part of the claimed invention, assuming that the target time period is the first time period of the plurality of time periods, there may be no previous time period for the target time period. In such cases, the processing device 130 may designate a start time point of the first time period as the start time point of the ideal time period. In some embodiments, the processing device 130 may designate a time point when a last pulse within the first time period generates as the end time point of the ideal time period. The processing device 130 may designate the actual pulse count within the first time period as the ideal pulse count within the ideal time period. In some embodiments, the processing device may designate a time point when a first pulse within the first time period generates as the end time point of the ideal time period. The processing device 130 may designate the ideal pulse count within the ideal time period as zero.

It should be noted that, for two consecutive time periods, when a pulse generates at an end time point of an earlier time period of the two consecutive time periods, if the pulse is counted in the earlier time period, the pulse may be deemed to belong to the earlier time period; if the pulse is not counted in the earlier time period, the pulse may be deemed to belong to the later time period of the two consecutive time periods and be counted in the later time period.

In 540, the processing device 130 (e.g., the speed determination module 440) (e.g., the processing circuits of the processor 220) may determine the speed of the rotor in the target time period based on the ideal time period and the ideal pulse count. In some embodiments, the processing device 130 may determine a ratio of the ideal pulse count within the ideal time period to the time length of the ideal time period. The processing device 130 may determine the speed of the rotor based on the ratio of the ideal pulse count to the time length of the ideal time period. In some embodiments, the processing device 130 may designate the ratio of the ideal pulse count to the time length of the ideal time period as the speed of the rotor.

According to some embodiments of the present disclosure, the start time point and the end time point of the ideal time period may be a time point when a pulse generates, respectively, which may improve the accuracy of the speed of the rotor determined based on the ideal time period and the ideal pulse count compared to a current technique, for example, an M technique, a T technique, an M/T technique, etc.

According to some embodiments of the present disclosure, assuming that the actual pulse count within the target time period is equal to zero, if a time length of the ideal time period is longer than the time threshold, the ideal pulse count may be designated as zero; if the time length of the ideal time period is smaller than or equal to the time threshold, the ideal pulse count may be designated as one. Therefore, the speed of the rotor may be controlled to reduce gradually by designating the ideal pulse count as one and finally stop by designating the ideal pulse count as zero, thereby facilitating precise control of the rotor speed.

Merely by way of example, assuming that the target time period includes the first time period ($T_1$) in FIG. 6, the ideal time period (e.g., $\Delta t_1$) is from a start time point of the first time period to a time point when a last pulse within the first time period generates, and the ideal pulse count is 1. The processing device 130 may designate the speed of the rotor as $1/\Delta t_1$. As another example, assuming that the target time period includes the second time period ($T_2$) in FIG. 6, the ideal time period (e.g., $\Delta t_2$) is from a time point when a last pulse within the first time period generates to a time point when a last pulse within the second time period generates, and the ideal pulse count is 3. The processing device 130 may designate the speed of the rotor as $3/\Delta t_2$. As a further example, assuming that the target time period includes the fourth time period ($T_4$) in FIG. 6, the ideal time period (e.g., $\Delta t_4$) is from a time point when a last pulse within the third time period ($T_3$) generates to an end time point of the fourth time period. Assuming that the ideal time period (e.g., $\Delta t_4$) is smaller than or equal to the time threshold illustrated in operation 530, the processing device 130 may designate the speed of the rotor as $1/\Delta t_4$.

In some embodiments, the processing device 130 may designate the speed of the rotor in the target time period as a speed of the rotor at the end time point within the target time period. The processing device 130 may output the speed of the rotor at the end time point within the target time period.

In some embodiments, the processing device 130 may designate the speed of the rotor in the target time period as a target speed of the rotor in the target time period.

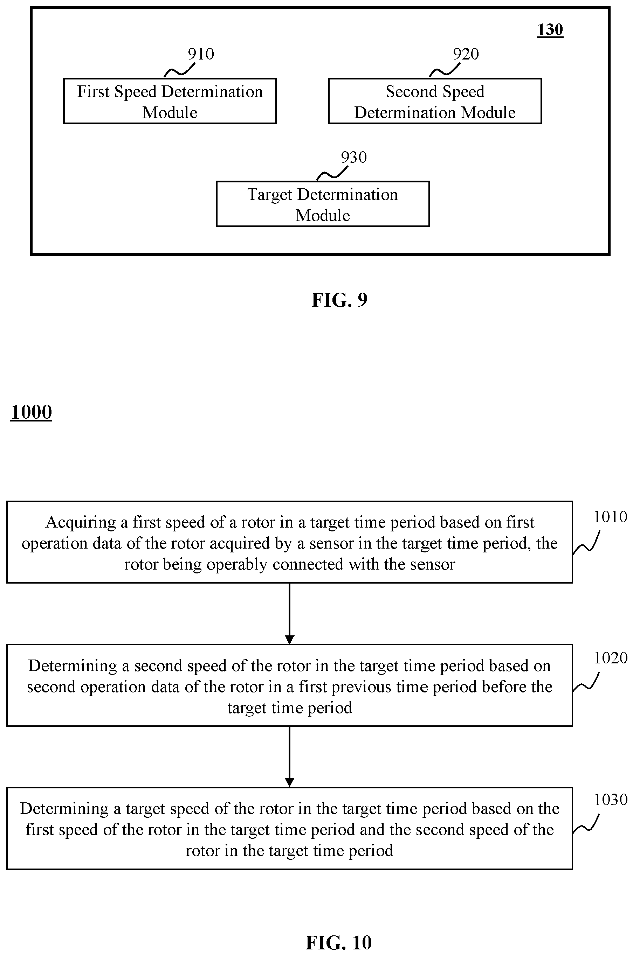

In some embodiments, the processing device 130 may determine the target speed of the rotor in the target time period based on the speed of the rotor in the target time period. For example, the processing device 130 may determine the target speed of the rotor in the target time period based on the speed according to process 1000 as described in FIG. 10. As another example, the processing device 130 may determine the target speed of the rotor in the target time period based on the speed using a trained machine learning model. In some embodiments, The trained machining learning model may be determined based on a plurality of training samples and a plurality of labels of the plurality of training samples. The plurality of training samples may include speeds of rotors in target time periods determined according to process 500 as described in FIG. 5, respectively. The plurality of labels may include target speeds of the rotors in the target time periods determined based on the speeds of the plurality of training samples according to process 1000 as described in FIG. 10, respectively.

In some embodiments, the speed of the rotor may be used to facilitate the movement of a device (a servo device) connected with the rotor. In some embodiments, the speed of the rotor may be used to facilitate the movement of at least a portion of a medical device, for example, a patient support, a collimator, an imaging source, a treatment head thereof, etc.

FIG. 9 is a block diagram illustrating an exemplary processing device according to some embodiments of the present disclosure. The processing device 130 may include a first speed determination module 910, a second speed determination module 920, and a target speed determination module 930.

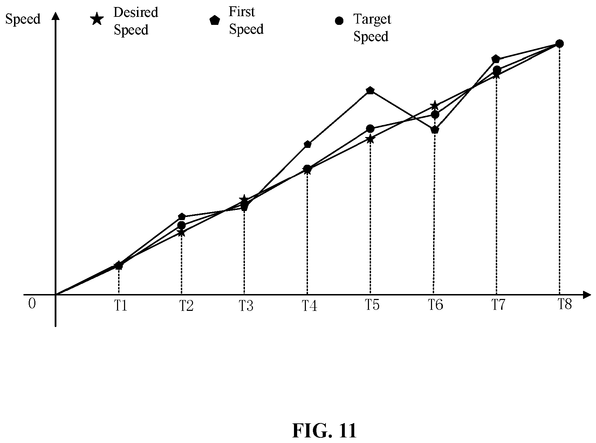

The first speed determination module 910 may be configured to acquire a first speed of a rotor in a target time period based on first operation data of the rotor acquired by a sensor in the target time period, more descriptions of which may be found elsewhere in the present disclosure (e.g., FIG. 10, FIG. 11, or the descriptions thereof).

The second speed determination module 920 may be configured to determine a second speed of the rotor in the target time period based on second operation data of the rotor in a first previous time period before the target time period, more descriptions of which may be found elsewhere in the present disclosure (e.g., FIG. 10, FIG. 11, or the descriptions thereof).

The target speed determination module 930 may be configured to determine a target speed of the rotor in the target time period based on the first speed of the rotor in the target time period and the second speed of the rotor in the target time period, more descriptions of which may be found elsewhere in the present disclosure (e.g., FIG. 10, FIG. 11, or the descriptions thereof).

FIG. 10 is a flowchart illustrating an exemplary process for determining a speed of a rotor according to some embodiments of the present disclosure. FIG. 11 is a schematic diagram illustrating exemplary time-speed curves of a rotor according to some embodiments of the present disclosure. In some embodiments, the process 1000 may be implemented as a set of instructions (e.g., an application) stored in the storage ROM 230 or RAM 240. The processor 220 and/or the modules in FIG. 9 may execute the set of instructions, and when executing the instructions, the processor 220 and/or the modules may be configured to perform the process 1000.

In 1010, the processing device 130 (e.g., the first speed determination module 910) may acquire a first speed of a rotor (e.g., the rotor 110 in FIG. 1) in a target time period based on first operation data of the rotor acquired by a sensor (e.g., the sensor 120 in FIG. 1) in the target time period. The rotor may be operably connected with the sensor. In some embodiments, the sensor may include an encoder, for example, an incremental encoder (e.g., an incremental photoelectric pulse encoder), an absolute encoder, etc.

In some embodiments, the first operation data may include a plurality of pulses associated with the movement of the rotor within a plurality of time periods. The sensor may convert the movement of the rotor into the plurality of pulses. The plurality of pulses may be output by the sensor. The first speed of the rotor may be determined based on the plurality of pulses. In some embodiments, the first speed of the rotor may be determined based on a speed determination technique, for example, an M technique, a T technique, an M/T technique, etc.

In the embodiment of the claimed invention, the first speed of the rotor is determined according to process 500 as described in FIG. 5. The first speed of the rotor is determined based on an ideal time period and an ideal pulse count within the ideal time period. In the embodiment of the claimed invention, the ideal time period may be determined based on at least one pulse associated with the rotor within a previous time period (also referred to as a third previous time period) of the target time period and an actual pulse count associated with the rotor within the target time period. The third previous time period may be before the target time period. The third previous time period may be the nearest time period, whose actual pulse count exceeds zero, to the target time period. The third time period and the target time period may be consecutive or not. The ideal pulse count may be determined based on the ideal time period or an actual pulse count within the target time period. More descriptions of the determination of the first speed of the rotor may be found elsewhere in the present disclosure, for example, FIGs. 5-8 and/or the descriptions thereof.

In 1020, the processing device 130 (e.g., the second speed determination module 920) may determine a second speed of the rotor in the target time period based on second operation data of the rotor in a first previous time period before the target time period. The first previous time period and the target time period may be consecutive in time. In other words, an end time point of the first previous time period may be a start time point of the target time period. In some embodiments, a time length of the first previous time period may be the same as a time length of the target time period.

In the embodiment of the claimed invention, the second operation data includes at least one of an acceleration of the rotor in the first previous time period or a target speed of the rotor in the first previous time period. In the embodiment of the claimed invention, the determination of the target speed of the rotor in the first previous time period is the same as or similar to the determination of the target speed of the rotor in the target time period, for example, according to process 500 as described in FIG. 5.

In some embodiments, the processing device 130 may determine the acceleration of the rotor in the first previous time period based on the first speeds of two time period previous to the target time period. For example, the processing device 130 may acquire, based on the sensor, a first speed of the rotor in the first previous time period. The processing device 130 may also acquire, based on the sensor, a first speed of the rotor in a second previous time period before the first previous time period. The second previous time period and the first previous time period may be consecutive or not. The processing device 130 may determine a time length between an end time point of the second previous time period and an end time point of the first previous time period. The processing device 130 may determine the acceleration of the rotor in the first previous time period based on the first speed of the rotor in the first previous time period, the first speed of the rotor in the second previous time period, and the time length between the end time point of the second previous time period and the end time point of the first previous time period.

In some embodiments, the processing device 130 may determine a speed difference between the first speed of the rotor in the first previous time period and the first speed of the rotor in the second previous time period. The processing device 130 may designate a ratio of the speed difference to the time length as the acceleration of the rotor in the first previous time period. In some embodiments, the processing device 130 may determine the acceleration of the rotor according to formula (1) below:

$$a_{N-1} = \frac{V_{N-1} - V_x}{\Delta t}, \qquad (1)$$

where $a_{N-1}$ refers to the acceleration of the rotor in the first previous time period, $V_{N-1}$ refers to the first speed of the rotor in the first previous time period, $V_x$ refers to the first speed of the rotor in the second previous time period, and $\Delta t$ refers to the time length between the end time point of the second previous time period and the end time point of the first previous time period.

In some embodiments, the determination of the first speed of the rotor in the first previous time period and/or the determination of the first speed of the rotor in the second previous time period may be the same as or similar to the determination of the first speed in the target time period, the descriptions of which are not repeated herein. In some embodiments, the processing device 130 may select the second previous time period based on a speed fluctuation of the rotor. The speed fluctuation of the rotor may refer to a difference between a first speed fluctuation when the rotor moves at the maximum speed and a second speed fluctuation when the rotor moves at the minimum speed during the movement of the rotor. The processing device 130 may determine whether the speed fluctuation of the rotor exceeds a fluctuation threshold. In response to determining that the speed fluctuation of the rotor is smaller than or equal to the fluctuation threshold, the second previous time period may be a time period before and consecutive to the first previous time period, that is, an end time point of the second previous time period is a start time point of the first previous time period. In response to determining that the speed fluctuation of the rotor exceeds the fluctuation threshold, there may be two or more time periods between the first previous time period and the second previous time period, that is, the first previous time period and the second previous time period may be not consecutive. Merely by way of example, assuming that the first previous time period is the sixth time period ($T_6$) in FIG. 6, in response to determining that the speed fluctuation of the rotor is smaller than or equal to the fluctuation threshold, the processing device 130 may select the fifth time period ($T_5$) in FIG. 6 as the second previous time period; in response to determining that the speed fluctuation of the rotor exceeds the fluctuation threshold, the processing device 130 may select the third time period ($T_3$) as the second previous time period.

In some embodiments, the fluctuation threshold may be a default setting of the speed monitoring system 100 or may be adjustable under different situations. In some embodiments, the processing device 130 may determine the fluctuation threshold of the rotor based on a plurality of reference movements of the rotor. In some embodiments, for each of the plurality of reference movements of the rotor, the processing device 130 may determine a first reference speed fluctuation when the rotor moves at the maximum speed and a second reference speed fluctuation when the rotor moves at the minimum speed. The processing device 130 may determine the fluctuation threshold based on a plurality of first reference speed fluctuation and a plurality of second reference speed fluctuation of the plurality of reference movements of the rotor.

In some examples, that are not part of the claimed invention, the processing device 130 may determine the second speed of the rotor in the target time period based on the acceleration of the rotor in the first previous time period and the target speed of the rotor in the first previous time period. In some examples, that are not part of the claimed invention, the processing device 130 may determine the second speed of the rotor based on the acceleration of the rotor in the first previous time period and the target speed of the rotor in the first previous time period according to a speed determination technique. For example, the speed determination technique may include linear fitting, squared difference fitting, quadratic fitting, model construction, artificial intelligence (AI), or the like, or any combination thereof.

In some examples, that are not part of the claimed invention, the processing device 130 may determine the second speed of the rotor in the target time period by determining a speed variation of the rotor within the target time period based on the acceleration of the rotor in the first previous time period and a time length of the target time period. The processing device 130 may determine the second speed of the rotor in the target time period based on the speed variation of the rotor within the target time period and the target speed of the rotor in the first previous time period.

In some examples, that are not part of the claimed invention, the processing device 130 may determine the speed variation of the rotor within the target time period according to formula (2) and the second speed of the rotor in the target time period according to formula (3) below:

$$\Delta V_N = a_{N-1} * \Delta T, \qquad (2)$$

$$V''_N = V'_{N-1} + \Delta V_N = V'_{N-1} + a_{N-1} * \Delta T, \qquad (3)$$

where $\Delta V_N$ refers to the speed variation of the rotor within the target time period, $a_{N-1}$ refers to the acceleration of the rotor in the first previous time period, $\Delta T$ refers to the time length of the target time period, $V''_N$ refers to the second speed of the rotor in the target time period, and $V'_{N-1}$ refers to the target speed of the rotor in the first previous time period.

In the embodiment of the claimed invention, the processing device 130 determines a weight to the acceleration of the rotor in the first previous time period. The processing device 130 determines the speed variation of the rotor within the target time period based on the acceleration of the rotor in the first previous time period, the time length of the target time period, and the weight. In the embodiment of the claimed invention, the processing device 130 determines the speed variation of the rotor within the target time period according to formula (4) and the second speed of the rotor in the target time period according to formula (5) below:

$$\Delta V_N = k_N * a_{N-1} * \Delta T, \tag{4}$$

$$V''_N = V'_{N-1} + \Delta V_N = V'_{N-1} + k_N * a_{N-1} * \Delta T, \tag{5}$$

where $\Delta V_N$ refers to the speed variation of the rotor within the target time period, $a_{N-1}$ refers to the acceleration of the rotor in the first previous time period, $\Delta T$ refers to the time length of the target time period, $k_N$ refers to the weight, $V''_N$ refers to the second speed of the rotor in the target time period, and $V'_{N-1}$ refers to the target speed of the rotor in the first previous time period.

In some embodiments, the weight may be a default setting of the speed monitoring system 100 or may be adjustable under different situations. In some embodiments, the processing device 130 may determine the weight based on an application scenario of the rotor. In some embodiments, the rotor may facilitate an up and down movement of a device (e.g., an arm (e.g., a suspending arm)). When the device accelerates upwards, the weight may be smaller than 1; when the arm accelerates downwards, the weight may be larger than 1. In some embodiments, the rotor may facilitate a damping movement of a device (e.g., a limit switch, a brake of an automobile, an automatic door). Since the rotor may be subjected to different resistances at different positions, the weight may be different at different positions of the rotor. In some embodiments, since a relationship between a resistance received by the rotor and a position of the rotor may be linear, a relationship between the weight and the position of the rotor may be linear. In some embodiments, the rotor may facilitate a non-linear movement of a device (e.g., a swing arm, an electromagnetic emitter). The weight may be adjusted according to a type of the non-linear movement. For example, the type the non-linear movement may include a parabolic movement, a hyperbolic movement, an exponential movement, a triangular movement, etc.

In 1030, the processing device 130 may determine a target speed of the rotor in the target time period based on the first speed of the rotor in the target time period and the second speed of the rotor in the target time period.

In some embodiments, the processing device 130 may determine a first weight to the first speed of the rotor in the target time period and a second weight to the second speed of the rotor in the target time period. The processing device 130 may determine the target speed of the rotor in the target time period based on the first weight, the second weight, the first speed of the rotor in the target time period, and the second speed of the rotor in the target time period.

In some embodiments, the processing device 130 may determine the first weight based on one or more first factors. The one or more first factors may include the precision (e.g., movement precision) of the rotor, a fluctuation of the rotor, a position of the rotor, etc. In some embodiments, the larger the fluctuation of the rotor is, the smaller the first weight may be. The smaller the precision of the rotor is, the smaller the first weight may be.

In some embodiments, the processing device 130 may determine the second weight based on one or more second factors, for example, a force received by a device driven by the rotor. In some embodiments, if the force received by the device continues to increase positively, the second weight may increase.

In some embodiments, the processing device 130 may determine the target speed of the rotor in the target time period according to formula (6) below:

$$V'_N = V_N * m_1 + V''_N * m_2, \tag{6}$$

where $V'_N$ refers to the target speed of the rotor in the target time period, $V_N$ refers to the first speed of the rotor in the target time period, $V''_N$ refers to the second speed of the rotor in the target time period, $m_1$ refers to the first weight, and $m_2$ refers to the second weight.

In some embodiments, the processing device 130 may designate an average value of the first speed and the second speed as the target speed of the rotor in the target time period. The processing device 130 may determine the target speed of the rotor in the target time period according to formula (7) below:

$$V'_N = \frac{V_N + V''_N}{2}, \tag{7}$$

where $V'_N$ refers to the target speed of the rotor in the target time period, $V_N$ refers to the first speed of the rotor in the target time period, and $V''_N$ refers to the second speed of the rotor in the target time period.

As described in connection with operation 1010, the first speed of the rotor may be determined based on the plurality of pulses associated with the movement of the rotor, which is determined without consideration of the application scenario of the rotor. As described in connection with operations 1020 and 1030, the target speed of the rotor may be determined by taking the actual application scenario of the rotor into consideration, thereby reducing a speed fluctuation due to the actual application scenario of the rotor. Therefore, the target speed may be more accurate than the first speed. The target speed may be more consistent with a desired speed of the rotor than the first speed (e.g., as illustrated in FIG. 11).

It should be noted that the above descriptions are for illustration purposes and non-limiting. In some embodiments, assuming that the target time period is one of at least one time period at the beginning of the plurality of time periods, the processing device 130 may designate the target speed of the rotor in the target time period as zero. A count of the at least one time period at the beginning of the plurality of time periods may be non-limiting, for example, 1, 2, 3, 4, 5, 6, etc.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the scope of the embodiments of this disclosure. The invention is defined by the appended claims.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in smaller than all features of a single foregoing disclosed embodiment. The invention is defined by the appended claims.

**Claims**

1. A system (100), comprising:

at least one storage device (150) including a set of instructions;
at least one processor (220) in communication with the at least one storage device (150), wherein when executing the set of instructions, the at least one processor (220) is configured to cause the system to perform operations including:

acquiring, based on a sensor (120), a plurality of pulses associated with movement of a rotor (110) within a plurality of time periods, the rotor (110) being operably connected with the sensor (120);
determining, based on a specific pulse associated with the movement of the rotor (110) within a previous time period and an actual pulse count associated with the movement of the rotor (110) within a target time period, an ideal time period for determining a first speed of the rotor (110) in the target time period; wherein the specific pulse associated with the movement of the rotor within the previous time period includes a first pulse within the previous time period; and the determining, based on the specific pulse associated with the movement of the rotor (110) within the previous time period and the actual pulse count associated with the movement of the rotor (110) within the target time period, the ideal time period for determining the first speed of the rotor (110) in the target time period includes:

determining a start time point of the ideal time period based on the specific pulse within the previous time period;
generating a first determination result by determining whether the actual pulse count within the target time period exceeds zero based on the actual pulse count within the target time period; and
determining an end time point of the ideal time period based on the first determination result, including: in response to determining that the actual pulse count within the target time period is equal to zero, designating an end time point of the target time period as the end time point of the ideal time period;

determining, based on at least one of the ideal time period or the actual pulse count within the target time period, an ideal pulse count within the ideal time period; and
determining the first speed of the rotor (110) in the target time period based on the ideal time period and the ideal pulse count.

2. The system (100) of claim 1, wherein the previous time period and the target time period are not consecutive, and a plurality of time lengths of the plurality of time periods are different.

3. The system (100) of anyone of claims 1 or 2, wherein the at least one processor (220) is further configured to cause the system (100) to perform operations including:

acquiring the first speed of the erotor (110) in the target time period based on first operation data of the rotor (110) acquired by the sensor (120) in the target time period, the rotor (110) being operably connected with the sensor (120); wherein the first operation data includes a plurality of pulses associated with the movement of the rotor within a plurality of time periods;
determining a second speed of the rotor (110) in the target time period based on second operation data of the rotor (110) in a first previous time period before the target time period; wherein the second operation data includes at least one of an acceleration of the rotor in the first previous time period or a target speed of the rotor in the first previous time period; and
determining a target speed of the rotor (110) in the target time period based on the first speed of the rotor (110) in the target time period and the second speed of the rotor (110) in the target time period; wherein the determining the second speed of the rotor (110) in the target time period based on the second operation data of the rotor (110) in the first previous time period before the target time period includes:

determining a speed variation of the rotor (110) within the target time period based on the acceleration of the rotor (110) in the first previous time period, a time length of the target time period and a weight to the acceleration; wherein the weight is determined by a resistance received by the rotor; and

determining the second speed of the rotor (110) in the target time period based on the speed variation of the rotor (110) within the target time period and the target speed of the rotor (110) in the first previous time period.

4. The system (100) of claim 3, wherein the determining the target speed of the rotor (110) in the target time period based on the first speed of the rotor (110) in the target time period and the second speed of the rotor (110) in the target time period includes:

    determining a first weight to the first speed of the rotor (110) in the target time period and a second weight to the second speed of the rotor (110) in the target time period; and
    determining the target speed of the rotor (110) in the target time period based on the first weight, the second weight, the first speed of the rotor (110) in the target time period, and the second speed of the rotor (110) in the target time period.

5. The system (100) of claim 3, wherein the determining the target speed of the rotor (110) in the target time period based on the first speed of the rotor (110) in the target time period and the second speed of the rotor (110) in the target time period includes:
    designating an average value of the first speed and the second speed as the target speed of the rotor (110) in the target time period.

6. The system (100) of any one of claim 4 or claim 5, wherein the acceleration of the rotor (110) in the first previous time period is determined by:

    acquiring, based on the sensor (120), a first speed of the rotor (110) in the first previous time period;
    acquiring, based on the sensor (120), a first speed of the rotor (110) in a second previous time period before the first previous time period;
    determining a time length between an end time point of the second previous time period and an end time point of the first previous time period; and
    determining the acceleration of the rotor (110) in the first previous time period based on the first speed of the rotor (110) in the first previous time period, the first speed of the rotor (110) in the second previous time period, and the time length between the end time point of the second previous time period and the end time point of the first previous time period.

7. The system (100) of any one of claims 3-6, wherein the first speed in the target time period is determined by:

    determining, based on a specific pulse associated with the movement of the rotor (110) within a third previous time period and an actual pulse count associated with the rotor (110) within the target time period, an ideal time period for determining the first speed of the rotor (110) in the target time period;
    determining, based on at least one of the ideal time period or an actual pulse count within the target time period, an ideal pulse count within the ideal time period; and
    determining the first speed of the rotor (110) in the target time period based on the ideal time period and the ideal pulse count.

8. The system (100) of claim 7, wherein the determining, based on the specific pulse associated with the movement of the rotor (110) within the third previous time period and the an actual pulse count associated with the rotor (110) within the target time period, the ideal time period for determining the first speed of the rotor (110) in the target time period includes:

    determining a start time point of the ideal time period based on the specific pulse within the third previous time period; and
    determining an end time point of the ideal time period based on the actual pulse count within the target time period.

9. The system (100) of claim 8, wherein the determining the end time point of the ideal time period based on the actual pulse count within the target time period includes:

    generating a first determination result by determining whether the actual pulse count within the target time period exceeds zero; and
    determining the end time point of the ideal time period based on the first determination result.

10. The system (100) of claim 9, wherein the determining the end time point of the ideal time period based on the first determination result includes:
in response to determining that the actual pulse count within the target time period is equal to zero, designating an end time point of the target time period as the end time point of the ideal time period.

11. The system (100) of claim 9 or claim 10, wherein the specific pulse associated with the movement of the rotor (110) within the third previous time period includes a last pulse within the third previous time period, and the start time point includes a time point when the last pulse within the third previous time period generates.

12. The system (100) of claim 9 or claim 10, wherein the specific pulse associated with the movement of the rotor (110) within the third previous time period includes a first pulse within the third previous time period, and the start time point of the ideal time period includes a time point when the first pulse within the previous time period generates.

13. The system (100) of any one of claims 7-12, wherein the determining the speed of the rotor (110) in the target time period based on the ideal time period and the ideal pulse count includes:

    determining a ratio of the ideal pulse count within the ideal time period to the time length of the ideal time period; and
    determining the speed of the rotor (110) based on the ratio.

14. The system (100) of any one of claims 7-13, wherein the at least one processor (220) is configured to cause the system (100) to perform operations further including:
outputting the speed of the rotor (110) at an end time point within the target time period.

15. A method implemented on the system of any of claims 1 or 2, comprising:

    acquiring the first speed of the rotor (110) in the target time period based on first operation data of the rotor (110) acquired by the sensor (120) in the target time period, the rotor (110) being operably connected with the sensor (120); wherein the first operation data includes a plurality of pulses associated with the movement of the rotor within a plurality of time periods;
    determining a second speed of the rotor (110) in the target time period based on second operation data of the rotor (110) in a first previous time period before the target time period; wherein the second operation data includes at least one of an acceleration of the rotor in the first previous time period or a target speed of the rotor in the first previous time period; and

        determining a target speed of the rotor (110) in the target time period based on the first speed of the rotor (110) in the target time period and the second speed of the rotor (110) in the target time period; wherein the determining the second speed of the rotor (110) in the target time period based on the second operation data of the rotor (110) in the first previous time period before the target time period includes:

            determining a speed variation of the rotor (110) within the target time period based on the acceleration of the rotor (110) in the first previous time period, a time length of the target time period and a weight to the acceleration; wherein the weight is determined by a resistance received by the rotor; and
            determining the second speed of the rotor (110) in the target time period based on the speed variation of the rotor (110) within the target time period and the target speed of the rotor (110) in the first previous time period.

**Patentansprüche**

1. System (100), umfassend:

    mindestens eine Speichervorrichtung (150), die einen Satz von Anweisungen beinhaltet;
    mindestens einen Prozessor (220), in Kommunikation mit der mindestens einen Speichervorrichtung (150), wobei der mindestens eine Prozessor (220), wenn er den Satz von Anweisungen ausführt, konfiguriert ist, um das System zu veranlassen, Operationen durchzuführen, die beinhalten:

        Erfassen, basierend auf einem Sensor (120), einer Vielzahl von Impulsen, die mit Bewegung eines Rotors (110) innerhalb einer Vielzahl von Zeiträumen verknüpft sind, wobei der Rotor (110) mit dem Sensor (120) wirkverbunden ist;

Bestimmen, basierend auf einem bestimmten Impuls, der mit der Bewegung des Rotors (110) innerhalb eines vorherigen Zeitraums verknüpft ist, und einer tatsächlichen Impulszahl, die mit der Bewegung des Rotors (110) innerhalb eines Zielzeitraums verknüpft ist, eines idealen Zeitraums zum Bestimmen einer ersten Drehzahl des Rotors (110) im Zielzeitraum; wobei der bestimmte Impuls, der mit der Bewegung des Rotors innerhalb des vorherigen Zeitraums verknüpft ist, einen ersten Impuls innerhalb des vorherigen Zeitraums beinhaltet; und das Bestimmen basierend auf dem bestimmten Impuls, der mit der Bewegung des Rotors (110) innerhalb des vorherigen Zeitraums verknüpft ist, und der tatsächlichen Impulszahl, die mit der Bewegung des Rotors (110) innerhalb des Zielzeitraums verknüpft ist, des idealen Zeitraums zum Bestimmen der ersten Drehzahl des Rotors (110) im Zielzeitraum beinhaltet;

Bestimmen eines Startzeitpunkts des idealen Zeitraums basierend auf dem bestimmten Impuls innerhalb des vorherigen Zeitraums;

Erzeugen eines ersten Bestimmungsergebnisses durch Bestimmen, ob die tatsächliche Impulszahl innerhalb des Zielzeitraums Null überschreitet, basierend auf der tatsächlichen Impulszahl innerhalb des Zielzeitraums; und Bestimmen eines Endzeitpunkts des idealen Zeitraums basierend auf dem ersten Bestimmungsergebnis, was beinhaltet:

als Reaktion auf Bestimmen, dass die tatsächliche Impulszahl innerhalb des Zielzeitraums gleich Null ist, Benennen eines Endzeitpunkts des Zielzeitraums als Endzeitpunkt des idealen Zeitraums; Bestimmen, basierend auf mindestens einem des idealen Zeitraums oder der tatsächlichen Impulszahl innerhalb des Zielzeitraums, einer idealen Impulszahl innerhalb des idealen Zeitraums; und Bestimmen der ersten Drehzahl des Rotors (110) im Zielzeitraum basierend auf dem idealen Zeitraum und der idealen Impulszahl.

2. System (100) nach Anspruch 1, wobei der vorherige Zeitraum und der Zielzeitraum nicht aufeinander folgen und eine Vielzahl von Zeitdauern der Vielzahl von Zeiträumen unterschiedlich sind.

3. System (100) nach einem der Ansprüche 1 oder 2, wobei der mindestens eine Prozessor (220) weiter konfiguriert ist, um das System (100) zu veranlassen, Operationen durchzuführen, die beinhalten:

Erfassen der ersten Drehzahl des Rotors (110) im Zielzeitraum basierend auf ersten Betriebsdaten des Rotors (110), die vom Sensor (120) im Zielzeitraum erfasst wurden, wobei der Rotor (110) mit dem Sensor (120) wirkverbunden ist;

wobei die ersten Betriebsdaten eine Vielzahl von Impulsen beinhalten, die mit der Bewegung des Rotors innerhalb einer Vielzahl von Zeiträumen verknüpft sind;

Bestimmen einer zweiten Drehzahl des Rotors (110) im Zielzeitraum basierend auf zweiten Betriebsdaten des Rotors (110) in einem ersten vorherigen Zeitraum vor dem Zielzeitraum; wobei die zweiten Betriebsdaten mindestens eine Beschleunigung des Rotors im ersten vorherigen Zeitraum oder eine Zieldrehzahl des Rotors im ersten vorherigen Zeitraum beinhalten; und

Bestimmen einer Zieldrehzahl des Rotors (110) im Zielzeitraum basierend auf der ersten Drehzahl des Rotors (110) im Zielzeitraum und der zweiten Drehzahl des Rotors (110) im Zielzeitraum; wobei

das Bestimmen der zweiten Drehzahl des Rotors (110) im Zielzeitraum basierend auf den zweiten Betriebsdaten des Rotors (110) im ersten vorherigen Zeitraum vor dem Zielzeitraum beinhaltet:

Bestimmen einer Drehzahländerung des Rotors (110) innerhalb des Zielzeitraums basierend auf der Beschleunigung des Rotors (110) im ersten vorherigen Zeitraum, einer Zeitdauer des Zielzeitraums und einer Gewichtung für die Beschleunigung; wobei die Gewichtung durch einen vom Rotor aufgenommenen Widerstand bestimmt wird; und

Bestimmen der zweiten Drehzahl des Rotors (110) im Zielzeitraum basierend auf der Drehzahländerung des Rotors (110) innerhalb des Zielzeitraums und der Zieldrehzahl des Rotors (110) im ersten vorherigen Zeitraum.

4. System (100) nach Anspruch 3, wobei das Bestimmen der Zieldrehzahl des Rotors (110) im Zielzeitraum basierend auf der ersten Drehzahl des Rotors (110) im Zielzeitraum und der zweiten Drehzahl des Rotors (110) im Zielzeitraum beinhaltet:

Bestimmen einer ersten Gewichtung für die erste Drehzahl des Rotors (110) im Zielzeitraum und einer zweiten Gewichtung für die zweite Drehzahl des Rotors (110) im Zielzeitraum; und

Bestimmen der Zieldrehzahl des Rotors (110) im Zielzeitraum basierend auf der ersten Gewichtung, der zweiten Gewichtung, der ersten Drehzahl des Rotors (110) im Zielzeitraum und der zweiten Drehzahl des Rotors (110) im Zielzeitraum.

5. System (100) nach Anspruch 3, wobei das Bestimmen der Zieldrehzahl des Rotors (110) im Zielzeitraum basierend auf der ersten Drehzahl des Rotors (110) im Zielzeitraum und der zweiten Drehzahl des Rotors (110) im Zielzeitraum beinhaltet:

Bestimmen eines Durchschnittswerts der ersten Drehzahl und der zweiten Drehzahl als die Zieldrehzahl des Rotors (110) im Zielzeitraum.

6. System (100) nach einem von Anspruch 4 oder Anspruch 5, wobei die Beschleunigung des Rotors (110) im ersten vorherigen Zeitraum bestimmt wird durch:

Erfassen, basierend auf dem Sensor (120), einer ersten Drehzahl des Rotors (110) im ersten vorherigen Zeitraum;

Erfassen, basierend auf dem Sensor (120), einer ersten Drehzahl des Rotors (110) in einem zweiten vorherigen Zeitraum vor dem ersten vorherigen Zeitraum;

Bestimmen einer Zeitdauer zwischen einem Endzeitpunkt des zweiten vorherigen Zeitraums und einem Endzeitpunkt des ersten vorherigen Zeitraums; und

Bestimmen der Beschleunigung des Rotors (110) im ersten vorherigen Zeitraum basierend auf der ersten Drehzahl des Rotors (110) im ersten vorherigen Zeitraum, der ersten Drehzahl des Rotors (110) im zweiten vorherigen Zeitraum und der Zeitdauer zwischen dem Endzeitpunkt des zweiten vorherigen Zeitraums und dem Endzeitpunkt des ersten vorherigen Zeitraums.

7. System (100) nach einem der Ansprüche 3-6, wobei die erste Drehzahl im Zielzeitraum bestimmt wird durch:

Bestimmen, basierend auf einem bestimmten Impuls, der mit der Bewegung des Rotors (110) innerhalb eines dritten vorherigen Zeitraums verknüpft ist, und einer tatsächlichen Impulszahl, die mit dem Rotor (110) innerhalb des Zielzeitraums verknüpft ist, eines idealen Zeitraums zum Bestimmen der ersten Drehzahl des Rotors (110) im Zielzeitraum;

Bestimmen, basierend auf mindestens einem des idealen Zeitraums oder einer tatsächlichen Impulszahl innerhalb des Zielzeitraums, einer idealen Impulszahl innerhalb des idealen Zeitraums; und

Bestimmen der ersten Drehzahl des Rotors (110) im Zielzeitraum basierend auf dem idealen Zeitraum und der idealen Impulszahl.

8. System (100) nach Anspruch 7, wobei das Bestimmen, basierend auf dem bestimmten Impuls, der mit der Bewegung des Rotors (110) innerhalb des dritten vorherigen Zeitraums verknüpft ist, und der tatsächlichen Impulszahl, die mit dem Rotor (110) innerhalb des Zielzeitraums verknüpft ist, des idealen Zeitraums zum Bestimmen der ersten Drehzahl des Rotors (110) im Zielzeitraum beinhaltet:

Bestimmen eines Startzeitpunkts des idealen Zeitraums basierend auf dem bestimmten Impuls innerhalb des dritten vorherigen Zeitraums; und

Bestimmen eines Endzeitpunkts des idealen Zeitraums basierend auf der tatsächlichen Impulszahl innerhalb des Zielzeitraums.

9. System (100) nach Anspruch 8, wobei das Bestimmen des Endzeitpunkts des idealen Zeitraums basierend auf der tatsächlichen Impulszahl innerhalb des Zielzeitraums beinhaltet:

Erzeugen eines ersten Bestimmungsergebnisses durch Bestimmen, ob die tatsächliche Impulszahl innerhalb des Zielzeitraums Null überschreitet; und

Bestimmen des Endzeitpunkts des idealen Zeitraums basierend auf dem ersten Bestimmungsergebnis.

10. System (100) nach Anspruch 9, wobei das Bestimmen des Endzeitpunkts des idealen Zeitraums basierend auf dem ersten Bestimmungsergebnis beinhaltet:
als Reaktion auf Bestimmen, dass die tatsächliche Impulszahl innerhalb des Zielzeitraums gleich Null ist, Benennen eines Endzeitpunkts des Zielzeitraums als den Endzeitpunkt des idealen Zeitraums.

11. System (100) nach Anspruch 9 oder Anspruch 10, wobei der mit der Bewegung des Rotors (110) innerhalb des dritten vorherigen Zeitraums verknüpfte bestimmte Impuls einen letzten Impuls innerhalb des dritten vorherigen Zeitraums beinhaltet und der Startzeitpunkt einen Zeitpunkt beinhaltet, an dem der letzte Impuls innerhalb des dritten vorherigen Zeitraums erzeugt wird.

12. System (100) nach Anspruch 9 oder Anspruch 10, wobei der mit der Bewegung des Rotors (110) innerhalb des dritten vorherigen Zeitraums verknüpfte bestimmte Impuls einen ersten Impuls innerhalb des dritten vorherigen Zeitraums beinhaltet und der Startzeitpunkt des idealen Zeitraums einen Zeitpunkt beinhaltet, an dem der erste Impuls innerhalb des vorherigen Zeitraums erzeugt wird.

13. System (100) nach einem der Ansprüche 7-12, wobei das Bestimmen der Drehzahl des Rotors (110) im Zielzeitraum basierend auf dem idealen Zielzeitraum und der idealen Impulszahl beinhaltet:

    Bestimmen eines Verhältnisses der idealen Impulszahl innerhalb des idealen Zeitraums zur Zeitdauer des idealen Zeitraums; und
    Bestimmen der Drehzahl des Rotors (110) basierend auf dem Verhältnis.

14. System (100) nach einem der Ansprüche 7-13, wobei der mindestens eine Prozessor (220) konfiguriert ist, um das System (100) zu veranlassen, Operationen durchzuführen, die beinhalten:
    Ausgeben der Drehzahl des Rotors (110) zu einem Endzeitpunkt innerhalb des Zielzeitraums.

15. Verfahren, das im System nach einem der Ansprüche 1 oder 2 umgesetzt wird, umfassend:

    Erfassen der ersten Drehzahl des Rotors (110) im Zielzeitraum basierend auf ersten Betriebsdaten des Rotors (110), die vom Sensor (120) im Zielzeitraum erfasst wurden, wobei der Rotor (110) mit dem Sensor (120) wirkverbunden ist;
    wobei die ersten Betriebsdaten eine Vielzahl von Impulsen beinhalten, die mit der Bewegung des Rotors innerhalb einer Vielzahl von Zeiträumen verknüpft sind;
    Bestimmen einer zweiten Drehzahl des Rotors (110) im Zielzeitraum basierend auf zweiten Betriebsdaten des Rotors (110) in einem ersten vorherigen Zeitraum vor dem Zielzeitraum; wobei die zweiten Betriebsdaten mindestens eine Beschleunigung des Rotors im ersten vorherigen Zeitraum oder eine Zieldrehzahl des Rotors im ersten vorherigen Zeitraum beinhalten; und
    Bestimmen einer Zieldrehzahl des Rotors (110) im Zielzeitraum basierend auf der ersten Drehzahl des Rotors (110) im Zielzeitraum und der zweiten Drehzahl des Rotors (110) im Zielzeitraum; wobei
    das Bestimmen der zweiten Drehzahl des Rotors (110) im Zielzeitraum basierend auf den zweiten Betriebsdaten des Rotors (110) im ersten vorherigen Zeitraum vor dem Zielzeitraum beinhaltet:

    Bestimmen einer Drehzahländerung des Rotors (110) innerhalb des Zielzeitraums basierend auf der Beschleunigung des Rotors (110) im ersten vorherigen Zeitraum, einer Zeitdauer des Zielzeitraums und einer Gewichtung für die Beschleunigung; wobei die Gewichtung durch einen vom Rotor aufgenommenen Widerstand bestimmt wird; und
    Bestimmen der zweiten Drehzahl des Rotors (110) im Zielzeitraum basierend auf der Drehzahländerung des Rotors (110) innerhalb des Zielzeitraums und der Zieldrehzahl des Rotors (110) im ersten vorherigen Zeitraum.

## Revendications

1. Système (100) comprenant :

    au moins un dispositif de stockage (150) incluant un ensemble d'instructions ;
    au moins un processeur (220) en communication avec le au moins un dispositif de stockage (150), dans lequel, lors de l'exécution de l'ensemble d'instructions, le au moins un processeur (220) est configuré pour amener le système à effectuer des opérations incluant :

    l'acquisition, sur la base d'un capteur (120), d'une pluralité d'impulsions associées au mouvement d'un rotor (110) dans une pluralité de périodes de temps, le rotor (110) étant raccordé de manière fonctionnelle au capteur (120) ;

la détermination, sur la base d'une impulsion spécifique associée au mouvement du rotor (110) pendant une précédente période de temps et d'un nombre d'impulsions réel associé au mouvement du rotor (110) pendant une période de temps cible, d'une période de temps idéale pour déterminer une première vitesse du rotor (110) pendant la période de temps cible ; dans lequel l'impulsion spécifique associée au mouvement du rotor pendant la précédente période de temps inclut une première impulsion pendant la précédente période de temps ; et la détermination, sur la base de l'impulsion spécifique associée au mouvement du rotor (110) pendant la précédente période de temps et du nombre d'impulsions réel associé au mouvement du rotor (110) pendant la période de temps cible, de la période de temps idéale pour déterminer la première vitesse du rotor (110) pendant la période de temps cible, inclut :

la détermination d'un moment de début de la période de temps idéale sur la base de l'impulsion spécifique pendant la précédente période de temps ;
la génération d'un premier résultat de détermination en déterminant si le nombre d'impulsions réel pendant la période de temps cible dépasse zéro sur la base du nombre d'impulsions réel pendant la période de temps cible ; et la détermination d'un moment de fin de la période de temps idéale sur la base du premier résultat de détermination, incluant :

à la suite de la détermination que le nombre d'impulsions réel pendant la période de temps cible est égal à zéro, la désignation d'un moment de fin de la période de temps cible comme moment de fin de la période de temps idéale ;
la détermination, sur la base d'au moins un de la période de temps idéale ou du nombre réel d'impulsions pendant la période de temps cible, d'un nombre d'impulsions idéal pendant la période de temps idéale ; et
la détermination de la première vitesse du rotor (110) pendant la période de temps cible sur la base de la période de temps idéale et du nombre d'impulsions idéal.

2. Système (100) selon la revendication 1, dans lequel la précédente période de temps et la période de temps cible ne sont pas consécutives, et une pluralité de durées de la pluralité de périodes de temps sont différentes.

3. Système (100) selon l'une quelconque des revendications 1 ou 2, dans lequel le au moins un processeur (220) est en outre configuré pour amener le système (100) à effectuer des opérations incluant :

l'acquisition de la première vitesse du rotor (110) pendant la période de temps cible sur la base des premières données de fonctionnement du rotor (110) acquises par le capteur (120) pendant la période de temps cible, le rotor (110) étant raccordé de manière fonctionnelle au capteur (120) ;
dans lequel les premières données de fonctionnement incluent une pluralité d'impulsions associées au mouvement du rotor dans une pluralité de périodes de temps ;
la détermination d'une seconde vitesse du rotor (110) pendant la période de temps cible sur la base de secondes données de fonctionnement du rotor (110) pendant une première précédente période de temps antérieure à la période de temps cible ; dans lequel les secondes données de fonctionnement incluent au moins une d'une accélération du rotor pendant la première précédente période de temps ou d'une vitesse cible du rotor pendant la première précédente période de temps ; et
la détermination d'une vitesse cible du rotor (110) pendant la période de temps cible sur la base de la première vitesse du rotor (110) pendant la période de temps cible et de la seconde vitesse du rotor (110) pendant la période de temps cible ; dans lequel
la détermination de la seconde vitesse du rotor (110) pendant la période de temps cible sur la base des secondes données de fonctionnement du rotor (110) pendant la première précédente période antérieure à la période de temps cible inclut :

la détermination d'une variation de vitesse du rotor (110) pendant la période de temps cible sur la base de l'accélération du rotor (110) pendant la première précédente période de temps, d'une durée de la période de temps cible et d'un poids à l'accélération ; dans lequel le poids est déterminé par une résistance reçue par le rotor ; et
la détermination de la seconde vitesse du rotor (110) pendant la période de temps cible sur la base de la variation de vitesse du rotor (110) pendant la période de temps cible et de la vitesse cible du rotor (110) pendant la première précédente période de temps.

4. Système (100) selon la revendication 3, dans lequel la détermination de la vitesse cible du rotor (110) pendant la période de temps cible sur la base de la première vitesse du rotor (110) pendant la période de temps cible et de la seconde vitesse du rotor (110) pendant la période de temps cible inclut :

la détermination d'un premier poids pour la première vitesse du rotor (110) pendant la période de temps cible et d'un second poids pour la seconde vitesse du rotor (110) pendant la période de temps cible ; et

la détermination de la vitesse cible du rotor (110) pendant la période de temps cible sur la base du premier poids, du second poids, de la première vitesse du rotor (110) pendant la période de temps cible, et de la seconde vitesse du rotor (110) pendant la période de temps cible.

5. Système (100) selon la revendication 3, dans lequel la détermination de la vitesse cible du rotor (110) pendant la période de temps cible sur la base de la première vitesse du rotor (110) pendant la période de temps cible et de la seconde vitesse du rotor (110) pendant la période de temps cible inclut :
la désignation d'une valeur moyenne de la première vitesse et de la seconde vitesse comme vitesse cible du rotor (110) pendant la période de temps cible.

6. Système (100) selon l'une quelconque de la revendication 4 ou de la revendication 5, dans lequel l'accélération du rotor (110) pendant la première précédente période de temps est déterminée par :

l'acquisition, sur la base du capteur (120), d'une première vitesse du rotor (110) pendant la première précédente période de temps ;

l'acquisition, sur la base du capteur (120), d'une première vitesse du rotor (110) pendant une deuxième précédente période de temps antérieure à la première précédente période de temps ;

la détermination d'une durée entre un moment de fin de la deuxième précédente période de temps et un moment de fin de la première précédente période de temps ; et

la détermination de l'accélération du rotor (110) pendant la première précédente période de temps sur la base de la première vitesse du rotor (110) pendant la première précédente période de temps, de la première vitesse du rotor (110) pendant la deuxième précédente période de temps, et de la durée entre le moment de fin de la deuxième précédente période de temps et le moment de fin de la première précédente période de temps.

7. Système (100) selon l'une quelconque des revendications 3-6, dans lequel la première vitesse pendant la période de temps cible est déterminée par :

la détermination, sur la base d'une impulsion spécifique associée au mouvement du rotor (110) pendant une troisième précédente période de temps et d'un nombre d'impulsions réel associé au rotor (110) pendant la période de temps cible, d'une période de temps idéale pour déterminer la première vitesse du rotor (110) pendant la période de temps cible ;

la détermination, sur la base d'au moins un de la période de temps idéale ou d'un nombre d'impulsions réel pendant la période de temps cible, d'un nombre d'impulsions idéal pendant la période de temps idéale ; et

la détermination de la première vitesse du rotor (110) pendant la période de temps cible sur la base de la période de temps idéale et du nombre d'impulsions idéal.

8. Système (100) selon la revendication 7, dans lequel la détermination, sur la base de l'impulsion spécifique associée au mouvement du rotor (110) pendant la troisième précédente période de temps et du nombre d'impulsions réel associé au rotor (110) pendant la période de temps cible, de la période de temps idéale pour déterminer la première vitesse du rotor (110) pendant la période de temps cible, inclut :

la détermination d'un moment de début de la période de temps idéale sur la base de l'impulsion spécifique pendant la troisième précédente période de temps ; et

la détermination d'un moment de fin de la période de temps idéale sur la base du nombre d'impulsions réel pendant la période de temps cible.

9. Système (100) selon la revendication 8, dans lequel la détermination du moment de fin de la période de temps idéale sur la base du nombre d'impulsions réel pendant la période de temps cible inclut :

la génération d'un premier résultat de détermination en déterminant si le nombre d'impulsions réel pendant la période de temps cible dépasse zéro ; et

la détermination du moment de fin de la période de temps idéale sur la base du premier résultat de détermination.

**10.** Système (100) selon la revendication 9, dans lequel la détermination du moment de fin de la période de temps idéale sur la base du premier résultat de détermination inclut :
à la suite de la détermination que le nombre d'impulsions réel pendant la période de temps cible est égal à zéro, la désignation d'un moment de fin de la période de temps cible comme moment de fin de la période de temps idéale.

**11.** Système (100) selon la revendication 9 ou la revendication 10, dans lequel l'impulsion spécifique associée au mouvement du rotor (110) pendant la troisième précédente période de temps inclut une dernière impulsion pendant la troisième précédente période de temps, et le moment de début inclut un moment auquel la dernière impulsion pendant la troisième précédente période de temps est générée.

**12.** Système (100) selon la revendication 9 ou la revendication 10, dans lequel l'impulsion spécifique associée au mouvement du rotor (110) pendant la troisième précédente période de temps inclut une première impulsion pendant la troisième précédente période de temps, et le moment de début de la période de temps idéale inclut un moment auquel la première impulsion pendant la précédente période de temps est générée.

**13.** Système (100) selon l'une quelconque des revendications 7-12, dans lequel la détermination de la vitesse du rotor (110) pendant la période de temps cible sur la base de la période de temps idéale et du nombre d'impulsions idéal inclut :

la détermination d'un rapport entre le nombre d'impulsions idéal pendant la période de temps idéale et la durée de la période de temps idéale ; et
la détermination de la vitesse du rotor (110) sur la base du rapport.

**14.** Système (100) selon l'une quelconque des revendications 7-13, dans lequel le au moins un processeur (220) est configuré pour amener le système (100) à effectuer des opérations incluant en outre :
la délivrance de la vitesse du rotor (110) à un moment de fin pendant la période de temps cible.

**15.** Procédé mis en œuvre sur le système selon l'une quelconque des revendications 1 ou 2 comprenant :

l'acquisition de la première vitesse du rotor (110) pendant la période de temps cible sur la base des premières données de fonctionnement du rotor (110) acquises par le capteur (120) pendant la période de temps cible, le rotor (110) étant raccordé de manière fonctionnelle au capteur (120) ;
dans lequel les premières données de fonctionnement incluent une pluralité d'impulsions associées au mouvement du rotor pendant une pluralité de périodes ;
la détermination d'une seconde vitesse du rotor (110) pendant la période de temps cible sur la base de secondes données de fonctionnement du rotor (110) pendant une première précédente période de temps antérieure à la période de temps cible ; dans lequel les secondes données de fonctionnement incluent au moins une d'une accélération du rotor pendant la première précédente période de temps ou d'une vitesse cible du rotor pendant la première précédente période de temps ; et
la détermination d'une vitesse cible du rotor (110) pendant la période de temps cible sur la base de la première vitesse du rotor (110) pendant la période de temps cible et de la seconde vitesse du rotor (110) pendant la période de temps cible ; dans lequel
la détermination de la seconde vitesse du rotor (110) pendant la période de temps cible sur la base des secondes données de fonctionnement du rotor (110) pendant la première précédente période de temps antérieure à la période de temps cible inclut :

la détermination d'une variation de vitesse du rotor (110) pendant la période de temps cible sur la base de l'accélération du rotor (110) pendant la première précédente période de temps, d'une durée de la période de temps cible et d'un poids à l'accélération ; dans lequel le poids est déterminé par une résistance reçue par le rotor ; et
la détermination de la seconde vitesse du rotor (110) pendant la période de temps cible sur la base de la variation de vitesse du rotor (110) pendant la période de temps cible et de la vitesse cible du rotor (110) pendant la première précédente période de temps.

150

Storage
Device

**100**

110

Rotor

140-1

140

((ρ)) Network

140-2

((ρ))

130

Sensor

120

**FIG. 1**

270

DISK

260

I/O

250

COM
PORTS

**200**

210

220

Processor

230

ROM

240

RAM

**FIG. 2**

300

310

Communication
Platform

320

Display

330

GPU

360
370

OS

340

CPU

380

App(s)

Memory

350

I/O

390

Storage

**FIG. 3**

130

410

Pulse Acquisition Module

420

Time Determination
Module

430

Count Determination
Module

440

Speed Determination
Module

**FIG. 4**

**500**

Acquiring, based on a sensor, a plurality of pulses associated with movement of a rotor within a plurality of time periods, the rotor being operably connected with the sensor

510

Determining, based on at least one pulse associated with the movement of the rotor within a previous time period and an actual pulse count associated with the movement of the rotor within a target time period, an ideal time period for determining a speed of the rotor in the target time period

520

Determining, based on at least one of the ideal time period or the actual pulse count within the target time period, an ideal pulse count within the ideal time period

530

Determining the speed of the rotor in the target time period based on the ideal time period and the ideal pulse count

540

**FIG. 5**

**FIG. 6**

**FIG. 7**

**FIG. 8**

**130**

910

First Speed Determination
Module

920

Second Speed
Determination Module

930

Target Determination
Module

**FIG. 9**

**1000**

| Acquiring a first speed of a rotor in a target time period based on first operation data of the rotor acquired by a sensor in the target time period, the rotor being operably connected with the sensor | 1010 |

| Determining a second speed of the rotor in the target time period based on second operation data of the rotor in a first previous time period before the target time period | 1020 |

| Determining a target speed of the rotor in the target time period based on the first speed of the rotor in the target time period and the second speed of the rotor in the target time period | 1030 |

**FIG. 10**

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110881706

- CN 106932604 A